# EUROPEAN PATENT APPLICATION

(11) **EP 3 480 772 A1**
(43) Date of publication of application: **08.05.2019**
(21) Application number: 18204352.1
(22) Date of filing: 05.11.2018
(51) Int. Cl.: G06Q 40/00

(54) **A METHOD AND SYSTEM FOR AUTOMATICALLY PROCESSING CORPORATE ACTION EVENTS**

(30) Priority: 07.11.2017 TW 106138513
(71) Applicant: Taiwan Depository & Clearing Corporation, Taipei City (TW)
(72) Inventor: Meng, Ching-Li, Taipei City (TW)
(74) Representative: Wittmann, Günther

(57) **Abstract**

The present invention provides a method and system for processing corporate actions events by using at least one server to connect multiple overseas custodians and multiple domestic institution, wherein the at least one server classifies multiple corporate actions events into multiple corporate actions event modules, wherein each of the multiple corporate actions event modules has multiple corporate actions events each having corresponding multiple predetermined parameters, wherein the at least one server receives messages transmitted by a overseas custodians and determines if a message content contains parameters corresponding to the parameters of one corporate actions event of one corporate actions event module, so that the at least one server can automatically process the corporate actions event and notify the result to a domestic institution corresponding to the corporate actions event.

## Description

### CROSS-REFERENCES TO RELATED APPLICATIONS

This patent application claims priority of Taiwan Patent Application No. 106138513, filed on Nov. 7, 2017, the entirety of which is incorporated herein by reference.

### BACKGROUND OF THE INVENTION

### I. Field of the Invention

The present invention relates to corporate actions events, and more particularly, to a system and method capable of automatically processing corporate actions events.

### II. Description of the Prior Art

Domestic institutions invest in cross-border securities and have the securities kept in overseas custodians. Corporate actions events are events called by the issuer of securities that affects the security and the holder of the security, such as dividend issuance, cash capital increase, renaming, stock splits, convening of shareholders' meetings, acquisitions, mergers and liquidation. Overseas custodians transmit corporate actions events of cross-border securities for viewing by domestic institutions via SWIFT messages. The full name of SWIFT is Society for Worldwide Interbank Financial Telecommunication, which is a global standard financial communication platform. SWIFT messages are exchanged between financial institutions. The message format and content is based on a standard defined by ISO15022. SMPG (The Securities Market Practice Group) defines templates for the corporate actions events and describes how to use SWIFT messages to transmit corporate actions events for 67 kinds of corporate actions events. Because SWIFT messages are hard to read and communications between multiple overseas custodians and multiple domestic institutions are also time-consuming and labor-intensive, human error can occur.

In summary, it can be seen that the inefficient transmission of cross-border corporate actions events from overseas custodians has been a long-standing issue in the current technology. Accordingly, there is a need to improve current technology to resolve this issue.

### SUMMARY OF THE INVENTION

One object of the present invention is to provide a method and system for automatically processing of corporate actions events from multiple overseas custodians, and notify the domestic institutions of the processing results to improve efficiency and reduce human error.

One object of the present invention is to provide a method and system for processing corporate actions events such that multiple overseas custodians and multiple domestic institutions can use a single window to process corporate actions events.

In one embodiment, a method for processing corporate actions events is disclosed, wherein the method comprises: using at least one server to connect multiple overseas custodians and multiple domestic institutions, wherein the at least one server categorizes multiple corporate actions events into multiple corporate actions event modules, wherein each of the multiple corporate actions event modules has corresponding multiple predetermined corporate actions events, wherein each corporate actions event has corresponding multiple predetermined parameters to process the corporate actions event; and using the at least one server to receive messages transmitted by the multiple overseas custodians, wherein the at least one server receives and determines whether a message content has the multiple parameters corresponding to one corporate actions event of one of the multiple corporate actions event modules, wherein if the at least one server determines that a message content has the multiple parameters corresponding to a first corporate actions event of a first corporate actions event module, wherein if the at least one server determines that a message content has the multiple parameters corresponding to a first corporate actions event of a first corporate actions event module, the at least one server automatically processes the first corporate actions event of the first corporate actions event module according to the corresponding multiple parameters of the first corporate actions event of the first corporate actions event module; and using the at least one server to output the processing results of the first corporate actions event to a first platform for a domestic institutions of the multiple domestic institutions corresponding to the first corporate actions event to view.

In one embodiment, the first platform is displayed on a terminal device, such as a computer or a mobile phone.

In one embodiment, the multiple modules comprise a notification-type corporate actions event module, a mandatory corporate actions event module, a selection-type corporate actions event module and other corporate actions event module.

In one embodiment, the messages from different sources may not be identical in terms of the multiple parameters of the same corporate actions events, and the order of the parameters may also be different.

In one embodiment, the at least one server will set the parameters and flow for processing an undefined corporate actions events if the at least one server determines that the message content does not contain the parameters of any corporate actions event in the multiple corporate actions event modules.

In one embodiment, the at least one server comprises at least one server of a depository.

In one embodiment, the message is a SWIFT message.

In one embodiment, a system for processing corporate actions events is disclosed, wherein the system comprises: at least one server, connecting multiple overseas custodians and multiple domestic institutions, wherein the at least one server categorizes multiple corporate actions events into multiple corporate actions event modules, wherein each of the multiple corporate actions event modules has corresponding multiple predetermined corporate actions events, wherein each corporate actions event has corresponding multiple predetermined parameters to process the corporate actions event, wherein the at least one server receives messages transmitted by the multiple overseas custodians and determines whether a message content has the multiple parameters corresponding to one corporate actions event of one of the multiple corporate actions event modules, wherein if the at least one server determines that a message content has the multiple parameters corresponding to a first corporate actions event of a first corporate actions event module, the at least one server automatically processes the first corporate actions event of the first corporate actions event module according to the corresponding multiple parameters of the first corporate actions event of the first corporate actions event module, and the at least one server outputs the processing results of the first corporate actions event to the first platform for domestic institutions of the multiple domestic institutions corresponding to the first corporate actions event to view.

In one embodiment, the multiple corporate actions event modules comprise a notification-type corporate actions event module, a mandatory corporate actions event module, a selection-type corporate actions event module and other corporate actions event module.

In one embodiment, the at least one server comprises at least one server of a depository.

In one embodiment, the first platform is displayed on a terminal device, such as a computer or a mobile phone.

In one embodiment, the at least one server will set the parameters and flow for processing the corporate actions if the at least one server determines that the message content does not contain the corresponding multiple parameters of any of the multiple modules.

In one embodiment, the message is a SWIFT message.

### BRIEF DESCRIPTION OF THE DRAWINGS

The foregoing aspects and many of the accompanying advantages of this invention will become more readily appreciated as the same becomes better understood by reference to the following detailed description when taken in conjunction with the accompanying drawings, wherein:
FIG. 1 is a schematic diagram illustrating a system for processing corporate actions events in accordance with one embodiment of the present invention;
FIG.2 is a flow chart illustrating a method for processing corporate actions events in accordance with one embodiment of the present invention;
FIG. 3 illustrating classifications and contents of multiple corporate actions event modules in accordance with one embodiment of the present invention;
FIG. 4 is a schematic diagram o illustrating predetermined parameters of a corporate actions event in accordance with one embodiment of the present invention; and

### DETAILED DESCRIPTION OF THE INVENTION

The detailed description of the present invention is described below. The described preferred embodiments are for purposes of illustration and description and are not intended to limit the scope of the invention.

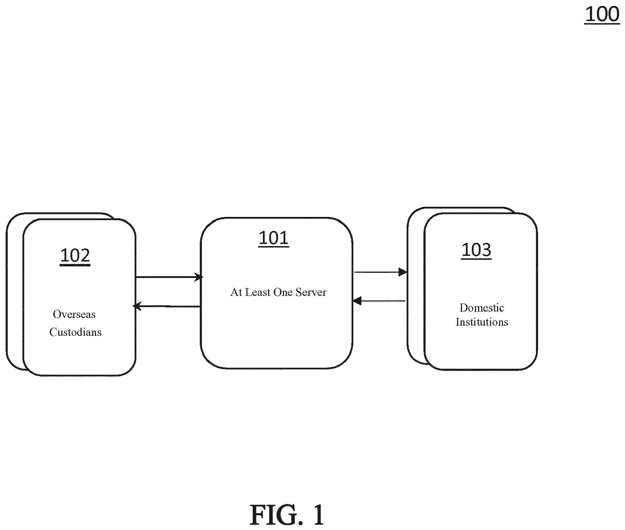

FIG. 1 illustrates a schematic diagram of a system for automatically processing of corporate actions events from multiple overseas custodians and notifying a corresponding domestic institution of the processing results of the corporate actions events. As shown in FIG. 1, the system 100 comprising at least one server 101 connecting multiple overseas custodians 102 and multiple domestic institutions 103, wherein the at least one server 101 categorizes multiple corporate actions events into multiple corporate actions event modules, wherein each of the multiple corporate actions event modules has corresponding multiple predetermined corporate actions events, wherein each corporate actions event has corresponding multiple predetermined parameters to process the corporate actions event, wherein the at least one server 101 receives SWIFT messages transmitted by the multiple overseas custodians 102, wherein the at least one server 101 determines whether a SWIFT message content contains the multiple parameters corresponding to one corporate actions event of one of the multiple corporate actions event modules, wherein if the at least one server 101 determines that a SWIFT message content has the multiple parameters corresponding to a first corporate actions event of a first corporate actions event module, the at least one server 101 automatically processes the first corporate actions event of the first corporate actions event module according to the corresponding multiple parameters of the first corporate actions event of the first corporate actions event module; and the at least one server 101 outputs the processing results of the first corporate actions event to a first platform for viewing by a domestic institution of the multiple domestic institutions 103 corresponding to the first corporate actions event.

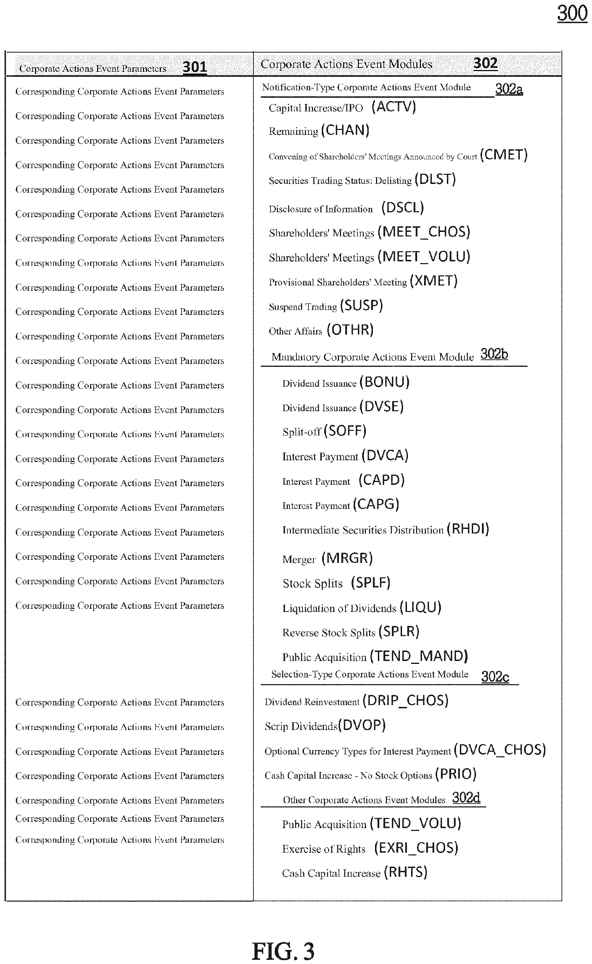

In one embodiment, FIG. 3 illustrates the classifications and contents of the multiple corporate actions event modules. As shown in FIG. 3, the multiple corporate actions event modules 302 can be categorized into a notification-type corporate actions event module 302a, a mandatory corporate actions event module 302b, a selection-type corporate actions event module 302c and other corporate actions event module 302d, wherein the notification-type corporate actions event module 302a defines 10 corporate actions events, the mandatory corporate actions event module 302b defines 12 corporate actions events, the selection-type corporate actions event module 302c defines 4 corporate actions events, and the other-type corporate actions event modules 302d defines 3 corporate actions events, and wherein each corporate actions event has corresponding predetermined corporate actions events parameters 301. The overseas custodians 102 transmit corporate actions events in standardized messages (such as SWIFT messages) for cross-border securities. Upon receiving the SWIFT messages, the at least first server 101 separates them into independent corporate actions events, wherein the important information of each SWIFT message is converted into Chinese in a standard form through a corresponding corporate actions event module for generating a report for viewing by a corresponding domestic institution of the multiple domestic institutions 103.

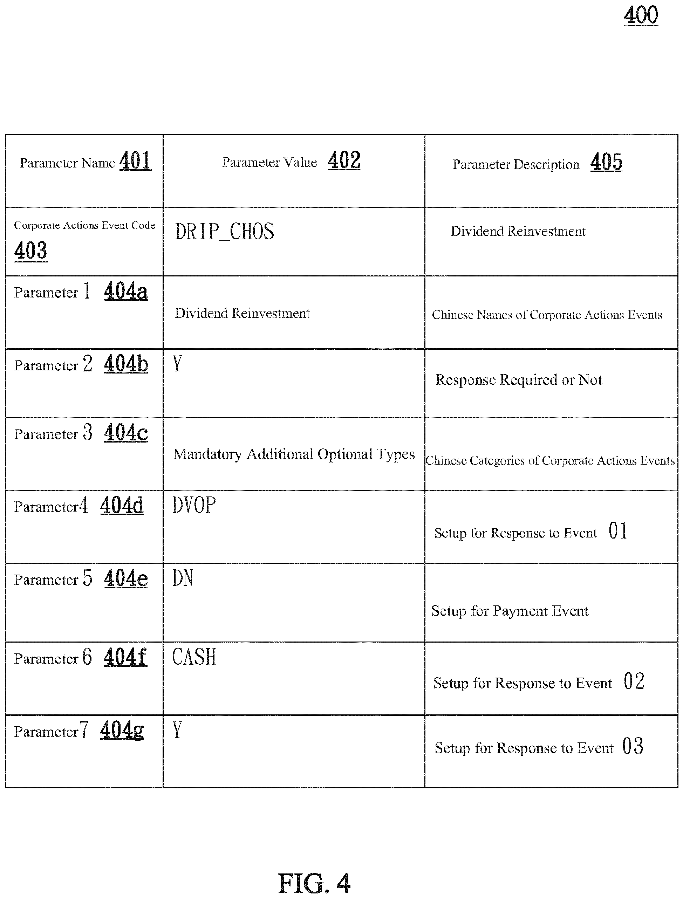

In one embodiment, FIG. 4 illustrates a schematic diagram of the multiple predetermined parameters of a corporate actions event, such as a dividend reinvestment event of a selection-type corporate actions event module 302c, wherein the dividend reinvestment event has three fields: parameter name 401, parameter value 402 and parameter description 405. The dividend reinvestment event has a corporate actions event code 403 and the corresponding multiple parameters 404a, 404b, 404c, 404d, 404e, 404f, 404g. In one embodiment, the corresponding multiple parameters are predetermined by the at least one server 101.

In one embodiment, the processing results of the first corporate actions event are outputted to a first platform for viewing by a domestic institution of the multiple domestic institutions 103 corresponding to the first corporate actions event.

In one embodiment, the at least one server will determine the corporate actions events parameters and flow for processing an event in the SWIFT message if the at least one server determines that the SWIFT message does not contain corresponding multiple parameters of any corporate actions event in the multiple corporate actions event modules.

In one embodiment, the multiple domestic institutions comprise financial institutions.

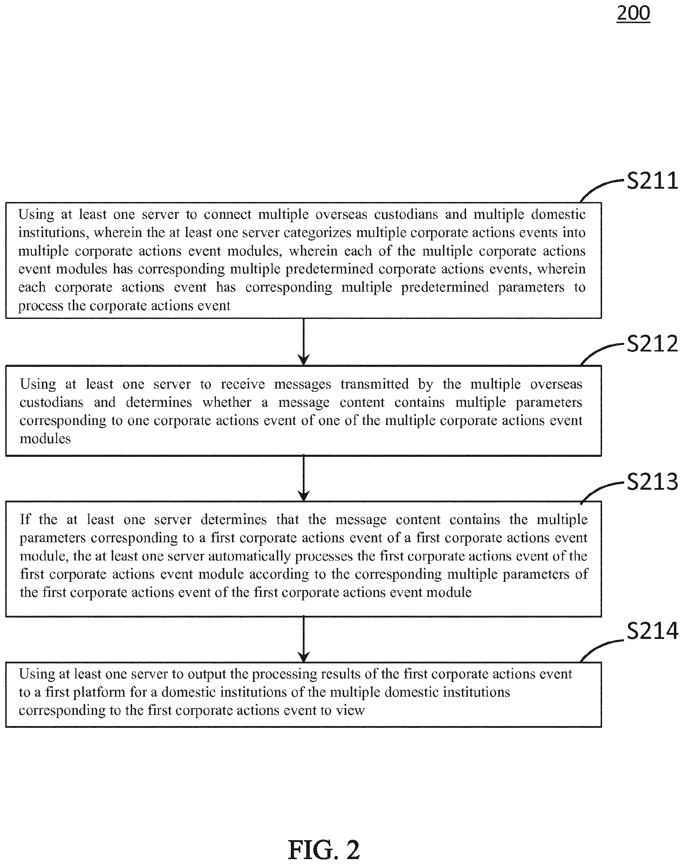

FIG. 2 illustrates a method for automatically processing of corporate actions events from multiple overseas custodians in accordance with one embodiment of the present invention. Please refer to FIGS. 1 and 2. The method for automatically processing of corporate actions events from multiple overseas custodians comprises the following steps. In step S211, using at least one server to connect multiple overseas custodians and multiple domestic institutions, wherein the at least one server 101 categorizes multiple corporate actions events into multiple corporate actions event modules, wherein each of the multiple corporate actions event modules has corresponding multiple predetermined corporate actions events, wherein each corporate actions event has corresponding multiple predetermined parameters to process the corporate actions event. In step 212, the at least one server receives the messages transmitted by the multiple overseas custodians and determines whether a message content contains multiple parameters corresponding to one corporate actions event of one of the multiple corporate actions event modules. In step 213, if the at least one server determines that the message content has the multiple parameters corresponding to a first corporate actions event of a first corporate actions event module, the at least one server automatically processes the first corporate actions event of the first corporate actions event module according to the corresponding multiple parameters of the first corporate actions event of the first corporate actions event module. In step 214, the at least one server outputs the processing results of the first corporate actions event to a first platform for viewing by a domestic institution of the multiple domestic institutions corresponding to the first corporate actions event.

In one embodiment, FIG. 3 illustrates the classifications and contents of the multiple corporate actions event modules. As shown in FIG. 3, the multiple corporate actions event modules 302 can be categorized into a notification-type corporate actions event module 302a, a mandatory corporate actions event module 302b, a selection-type corporate actions event module 302c and other corporate actions event module 302d, wherein the notification-type corporate actions event module 302a defines 10 corporate actions events, the mandatory corporate actions event module 302b defines 12 corporate actions events, the selection-type corporate actions event module 302c defines 4 corporate actions events, and the other-type corporate actions event modules 302d defines 3 corporate actions events, and wherein the corporate actions events of each corporate actions event module has predetermined corporate actions events parameters 301. The overseas custodians 102 transmit corporate actions events in standardized messages (SWIFT messages) for cross-border securities. Upon receiving the SWIFT messages, the at least first server 101 separates them into independent corporate actions events, wherein the important information of each SWIFT message is converted into Chinese in a standard form through the corporate actions event module for generating a report to the domestic institutions 103.

In one embodiment, FIG. 4 illustrates a schematic diagram of the multiple predetermined parameters of a corporate actions event, such as a dividend reinvestment event of a selection-type corporate actions event module 302c, wherein the dividend reinvestment event has three fields: parameter name 401, parameter value 402 and parameter description 405. The dividend reinvestment event has a corporate actions event code 403 and the corresponding multiple parameters 404a, 404b, 404c, 404d, 404e, 404f, 404g. In one embodiment, the corresponding multiple parameters are predetermined by the at least one server 101.

In one embodiment, the processing results of the first corporate actions event are output to a first platform for viewing by a domestic institution of the multiple domestic institutions corresponding to the first corporate actions event.

In one embodiment, the at least one server will be used to set up the corporate actions event parameters and flow for processing an event in the SWIFT message if the at least one server determines that the SWIFT message does not contain corresponding multiple parameters of any corporate actions event in the multiple corporate actions event modules.

In one embodiment, the overseas custodians 102, such as a foreign custodian (e.g. Euroclear, Clearstream, JP Morgan), sends a SWIFT message for notifying a corporate actions event. SWIFT GateWay receives the SWIFT message from the foreign custodian and forwards the SWIFT message to the cross-border custodian system of the at least one server 101. The cross-border custodian system of the at least one server 101 receives the SWIFT message and performs SWIFT message analysis according to the overseas custodian SWIFT BIC CODE, MT564 SWIFT message parameter, MT566 SWIFT message parameter, MT568 SWIFT message parameter and stores the analyzed SWIFT message into the database. The cross-border custodian system analyzes the type of corporate actions event based on the corporate actions event parameters corresponding to the analyzed event in the SWIFT message. The follow-up corporate actions event maintenance is carried out for the defined corporate actions events. If there is an undefined corporate actions event, corresponding corporate actions events parameters and a corresponding flow for processing the undefined corporate actions event will be set up. Through the "corporate actions events maintenance" of the cross-border custodian system, confirmation of information on the corporate actions event is carried out. After the confirmation of the corporate actions events is completed, the system is able to process the corresponding corporate actions event based on the corporate actions event type. After the completion of the confirmation of the corporate actions event, the system generates operation items for the corporate actions event according to the type and the flow of the corporate actions event, and then the operation items of the corporate actions event can be automatically executed by the system. A participant can receive notification of the processing results of corporate actions events through cross-border custodian system.

In one embodiment, the multiple domestic institutions comprise financial institutions.

In one embodiment, the at least one server comprises at least one server of a depository. The software and hardware architecture of the method and system for automatically processing the corporate actions events. The system, in the present invention, for automatically processing corporate actions events can use load balancing architecture with multiple servers to achieve high availability. Through this mechanism, the traffic load can be distributed equally to each server to achieve load balancing. If one server is shut down in the group, the load balancing will direct the load of the failed server to other servers, thereby providing uninterrupted network services. The use of a server load balancing architecture provides the following benefits: increased reliability, improved server service performance, easier server management, and independence of hardware architecture or operating systems.

The method and system, in the present invention, for automatically processing corporate actions events has numerous advantages. Corporate actions events from multiple overseas custodians can be automatically processed, and the corresponding domestic institutions are notified of the processing results to improve efficiency and reduce human error. Also, multiple overseas custodians and multiple domestic institutions can use a single window to process corporate actions events.

While the invention has been described in connection with the preferred embodiments, it is not intended to limit the scope of the invention. Any person skilled in the art can make some changes and modifications without departing from the spirit and scope of the present invention. The scope of the patent protection of the invention hence shall be subject to the definition of the scope of the patent application attached hereto.

## Claims

1. A method for processing corporate actions events, said method comprising:
using at least one server to connect multiple overseas custodians and multiple domestic institutions, wherein the at least one server categorizes multiple corporate actions events into multiple corporate actions event modules, wherein each of the multiple corporate actions event modules has corresponding multiple predetermined corporate actions events, wherein each corporate actions event has corresponding multiple predetermined parameters to process the corporate actions event; and
using the at least one server to receive messages transmitted by the multiple overseas custodians, wherein the at least one server receives and determines whether a message content has the multiple parameters corresponding to one corporate actions event of one of the multiple corporate actions event modules, wherein if the at least one server determines that a message content has the multiple parameters corresponding to a first corporate actions event of a first corporate actions event module, wherein if the at least one server determines that a message content has the multiple parameters corresponding to a first corporate actions event of a first corporate actions event module, the at least one server automatically processes the first corporate actions event of the first corporate actions event module according to the corresponding multiple parameters of the first corporate actions event of the first corporate actions event module; and
using the at least one server to output the processing results of the first corporate actions event to a first platform for a domestic institution of the multiple domestic institutions corresponding to the first corporate actions event to view.

2. The method according to claim 1, wherein the multiple modules comprise a notification-type corporate actions event module, a mandatory corporate actions event module, a selection-type corporate actions event module and other corporate actions event module.

3. The method according to claim 1, wherein the messages from different sources may not be identical for the multiple parameters of the same corporate actions events, and the order of the parameters may also be different.

4. The method according to claim 1, wherein the at least one server will determine the corporate actions event parameters and process for the event of the message if the at least one server determines that the message content does not have multiple parameters corresponding to any of the multiple modules.

5. The method according to claim 1, wherein the at least one server comprises at least one server of a depository.

6. The method according to claim 1, wherein the message is a SWIFT message.

7. A system for processing corporate actions events, said system comprising:
at least one server, connecting multiple overseas custodians and multiple domestic institutions, wherein the at least one server categorizes multiple corporate actions events into multiple corporate actions event modules, wherein each of the multiple corporate actions event modules has corresponding multiple predetermined corporate actions events, wherein each corporate actions event has corresponding multiple predetermined parameters to process the corporate actions event, wherein the at least one server receives messages transmitted by the multiple overseas custodians and determines whether a message content has the multiple parameters corresponding to one corporate actions event of one of the multiple corporate actions event modules, wherein if the at least one server determines that a message content has the multiple parameters corresponding to a first corporate actions event of a first corporate actions event module, the at least one server automatically processes the first corporate actions event of the first corporate actions event module according to the corresponding multiple parameters of the first corporate actions event of the first corporate actions event module, and the at least one server outputs the processing results of the first corporate actions event to a first platform for a domestic institution of the multiple domestic institutions corresponding to the first corporate actions event to view.

8. The system according to claim 7, wherein the multiple modules comprise a notification-type corporate actions event module, a mandatory corporate actions event module, a selection-type corporate actions event module and other corporate actions event module.

9. The system according to claim 7, wherein the at least one server comprises at least one server of a depository.

10. The system according to claim 7, wherein the at least one server will be used to set up the corporate actions event parameters and flow for processing an event in the message if the at least one server determines that the message does not contain corresponding multiple parameters of any corporate actions event in the multiple corporate actions event modules.

11. The system according to claim 7, wherein the message is a SWIFT message.
